# EUROPEAN PATENT APPLICATION

(11) **EP 4 764 082 A1**
(43) Date of publication of application: **24.06.2026**
(21) Application number: 24386152.3
(22) Date of filing: 20.12.2024
(51) Int. Cl.: E02B 3/12, B01J 19/06, C04B 28/10

(54) **NATURAL SCOUR PROTECTION**

(71) Applicant: National and Kapodistrian University of Athens, 10679 Athens (GR)
(72) Inventor: Evelpidou, Niki, 15784 Athens (GR); Saitis, Giannis, 15784 Athens (GR); Livieratos, Antonios, 10559 Athens (GR)
(74) Representative: Lewis Silkin LLP

(57) **Abstract**

A method for producing an eco-friendly protective material to provide scour protection for artificial structures in aquatic environments is provided. The method involves depositing natural granular material from the geological region of the structure's environment into a mold and supplying an agent such as a bacterial suspension to initiate cementation. The agent may be selected based on analysis of local material and water samples to determine the most effective agent for cementation. The method results in a protective material that mimics natural beachrock formation, offering an environmentally sustainable solution for scour protection in marine and coastal infrastructure.

## Description

### Field of Invention

The present invention relates to protection of structures in aquatic environments from erosion, and particularly to eco-friendly development of natural materials which can be used to protect structures to protect them from scour.

### Technical background

As human intervention in coastal and marine environments increases, the need to protect critical infrastructure from marine erosion becomes more urgent. Protection from hydrodynamic effects, such as the erosive scour effect, therefore plays a crucial role in the design and maintenance of marine structures such as harbours, offshore wind turbines and sensitive coastal works such as those requiring submarine cable routing. Preventing scour helps to maintain the dynamic behaviour of the structure, while changes in the natural frequency or fundamental period of the structure are minimised, ensuring stability and reducing the risk of structural deterioration. Maintaining nearshore and offshore infrastructures, reducing their cost and providing positive environmental effects is therefore in accordance with world environment strategies.

Conventional scour protection strategies, such as rip-rap, soil-cement bags, artificial reefs and concrete matrices, use materials selected based on availability and cost-effectiveness, taking into account particular local environmental conditions and project requirements. However, such approaches involve consumption of raw materials and production of greenhouse gas emissions, thus introducing foreign materials to an environment, and contributing to climate change and rising sea-levels in the process.

The impact on coastal infrastructure of sea-level rises, due to climate change, is critical, especially in port areas. The design and planning of coastal settlements and infrastructure should consider the long-term technical and economical consequences of seal-level rises, in terms of ensuring long-term stability and resilience of marine structures, while optimising the materials required to achieve this.

Embodiments of the present invention are developed in this context, and aim to provide an eco-friendly method of producing a material for protecting structures in aquatic environments such as marine or river settings, minimising use of raw materials and energy, while introducing a variety of environmental benefits set out in this disclosure.

### Summary of invention

According to an aspect of the present invention, there is provided a method of producing a protective material for providing scour protection to an artificial structure in an aquatic environment, comprising: providing a mold; depositing natural granular material, from a region having geological characteristics common to the aquatic environment of the structure, in the mold; supplying an agent to the natural granular material to initialise cementation of the natural granular material in the mold, such that the cemented natural granular material forms the protective material.

The method mimics natural consolidation of loose material to produce a durable protective material reducing the scour effect around the entry of such structures into a sea bed or river bed. The method is an innovative, eco-friendly solution for scour protection that mimics natural processes, minimizes the use of raw materials, and contributes positively to the environment. By using material having geological characteristics in common with the aquatic environment of the structure, the method reduces the need for transportation of materials, lowering both costs and carbon emissions associated with logistics, and enabling repurposing of local materials. The method aligns with global environmental strategies.

In embodiments, the natural granular material is natural sediment from the aquatic environment of the structure.

In embodiments, the agent is an enzyme.

In embodiments, the agent is a bacterial suspension to initialise biochemical cementation of the natural granular material.

In embodiments, the method comprises selecting the bacterial suspension for supply to the natural sediment, and organic solidification solution, based on analysis of the bacteria content of sediment and water samples at or near the location of the structure to determine the bacteria in the water samples most active in causing microbiologically-induced calcite precipitation in the sediment samples. By analyzing and selecting optimal bacterial strains from the local environment, the most effective microbial-induced carbonate precipitation for the specific site conditions can be used.

In embodiments, the method comprises determining one or more parameters of the protective material including at least one of geometry, thickness and resilience, based on properties of the sediment samples cemented using the selected bacterial suspension, and the depth of the structure in the aquatic environment; and providing the mold having a shape for forming the protective material having the determined one or more parameters. In this way, customization of the protective material's properties based on specific environmental conditions and structural requirements can be achieved, ensuring optimal performance and fit for each unique application

In embodiments, the mold comprises a plurality of units, the method comprising forming a plurality of units of protective material by depositing natural granular material into each unit of the mold, and supplying the agent to the natural granular material in each unit of the mold. The use of a modular mold structure allows for scalable production and easier handling, installation, and replacement of the protective material, enhancing flexibility in application and maintenance.

In embodiments, the plurality of units of the mold are arranged such that the plurality of units of protective material form tiles configured to attach to the structure as a coating in the form of a tessellation. Creating a tessellated tile system allows for comprehensive coverage of the structure, minimizing weak points in the scour protection while facilitating easier installation and potential replacement of individual tiles if needed.

In embodiments, the method comprises comprising determining whether that the natural granular material has cemented to form the protective material within a predetermined time; if the natural granular material has cemented to form the protective material within the predetermined time, terminating the cementation; if the natural sediment has not cemented to form the protective material within the predetermined time, adjusting the shape of the mold, depositing natural granular material in the adjusted mold, and supplying the agent to the natural granular material in the adjusted mold; wherein determining whether that the natural granular material has cemented to form the protective material within a predetermined time is performed by analysing one or more of a uniaxial unconfined compressive strength, porosity, organic carbon content, mineralogy, geochemical characteristics, and lignocellulosic biomass composition determining whether that the natural sediment has cemented to form the protective material within a predetermined time; if the natural sediment has cemented to form the protective material within the predetermined time, terminating supply of the bacterial suspension; if the natural sediment has not cemented to form the protective material within the predetermined time, adjusting the shape of the mold, depositing natural sediment in the adjusted mold, and supplying the bacterial suspension to the natural sediment in the adjusted mold; wherein determining whether that the natural sediment has cemented to form the protective material within a predetermined time is performed by analysing one or more of a uniaxial unconfined compressive strength, porosity, organic carbon content, mineralogy, geochemical characteristics, and lignocellulosic biomass composition.

This quality control step ensures the protective material meets necessary standards for strength and durability, allowing for adjustments in the production process if needed to achieve optimal results.

In embodiments, the mold is formed of a watertight material, and the method further comprises lining the mold with a geotextile shell prior to depositing the natural granular material, wherein the geotextile shell comprises a porous geotextile material, having a porosity at which the supplied agent is contained within the geotextile shell. The use of a geotextile shell enhances the structural integrity of the protective material while allowing for controlled interaction with the aquatic environment, potentially improving longevity and effectiveness of the scour protection.

According to a second aspect of the present invention, there is provided a protective material produced according to the method of the first aspect.

In embodiments, the protective material comprises means for attachment to the structure to be protected.

### Description of Figures

Embodiments of the present invention will be described by way of example only, with reference to the accompanying drawings, of which:
Figure 1 is a flow chart illustrating a methodology for constructing a coastal protection structure, within which methods of embodiments of the present invention are performed; and
Figure 2 illustrates a tiled coating of protective material, according to embodiments of the present invention.

### Detailed description

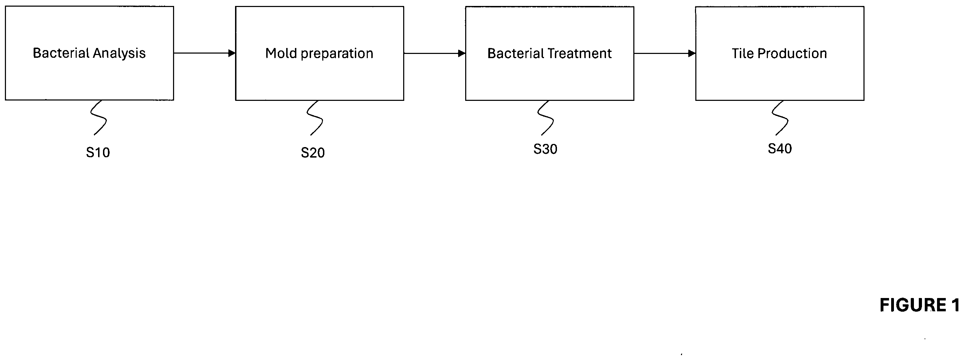

A methodology for producing a protective material for providing scour protection can be divided into four phases, as illustrated in Figure 1. Of the four phases, embodiments of the present invention represent a combination of the second, third and fourth stages of the methodology, with the first stage representing preliminary analysis with which embodiments of the present invention are configured. Some embodiments, however, also include the preliminary analysis step.

The methodology combines field work and laboratory analysis to produce natural materials that can be positioned near, or coated on, artificial structures in aquatic environments to protect them. Examples of such artificial structures are harbours, wind turbine monopiles foundations for bridges or piers, and submarine coastal routing, installed in coastal or offshore marine settings, or in rivers. In such aquatic environments, water flow is particularly fast around such structures, as is known from fluid dynamic modelling. This causes hydrodynamic frictional erosion, referred to herein as scouring of the sea bed or river bed around the position at which the structure is installed in the sea or river bed, weakening the installation and reducing stability.

The scour effect is reduced if the protective material, produced by embodiments of the present invention, is arranged near the artificial structure. The protective material introduces surface complexity and texture, which resist tidal forces and water currents to reduce flow velocity around the structure which is protected. The exact nature of the protective material is dependent upon its intended application and environmental conditions, and the methodology described below enables production of protective materials which do not introduce any foreign material to the environment of the structure to be protected.

The methodology is based on consolidation of natural granular material, such as sand or sediment, to produce a material having a structure and properties approximating those of beachrocks, which are known to act as natural breakwaters.

The four stages illustrated in Figure 1 are as follows:

### (1) Bacterial Analysis

In the first phase of bacterial analysis, S10, laboratory testing is performed to identify bacteria present in the environment of the artificial structure to be protected. Sediment and water samples are collected from the environment, and the most active bacteria in carbonate precipitation are identified.

The nature of such testing is well known according to the state of the art. In one example, sand and water samples are analysed in the laboratory to identify bacterial content by performing urea hydrolysis to characterise microbiologically-induced calcite precipitation (MICP). Sand samples are treated for mineralogical analysis using X-ray diffraction (XRD), while water samples are analysed for characteristics such as temperature, CaCO₃, Mg²⁺ and salinity. Both sample types are analysed for bacteria identification through third generation (nanopore) sequencing of the 16S rRNA gene. In parallel, the culturable microbial community is analysed using suitable media such as ZoBell2216E. Isolated strains are characterized (16S rRNA) and their growth kinetics are determined with respect to the corresponding calcium precipitation rates.

The results are combined with those obtained from urea hydrolysis of *in-vitro* solidified samples, obtained from local sediments and bacteria from the water, in order to isolate those bacterial communities which are most active and which will be most effective to trigger beachrock formation. Their physiology and interactions are studied, to enable production of an artificial inoculant for production of a sample of protective material, which is triggered by a natural biocementation process.

Experiments are performed in order to test the *in-vitro* growth and solidification of the samples, artificially triggered by the identified inoculant. Experiments are conducted by setting a number of experimental parameters and conditions, including qualitative and quantitative aspects of the bacterial populations, CaCO₃ content, water-depth in relation to mean sea level (m.s.l.) and water table, the thickness of the resulting sample, and distance from the shoreline.

The solidified samples, together with clone and control samples, are tested to determine their uniaxial unconfined compressive strength (UCS) using needle penetration tests and HCl rinsing is performed to estimate the cement content. The samples are analysed under polarized optical microscopy, scanning electron microscopy (SEM), energy-dispersive X-ray spectroscopy (EDS) and XRD for correlation with literature analysis of naturally-occurring beachrocks.

For example, the most common cemental material is a calcite polyform which is observed in naturally-occurring beachrocks. High-magnesium calcite (HMC) contains > 5 mol % MgCO₃, along with aragonite crystals. In the lower intertidal zone, beachrock cement consists of acicular aragonite forming isopachous fringes, while HMC cements form bladed isopachous rims or brown-coloured micritic size crystal, pelletal formations, sediment grain coatings and pores fillings. On the other hand, cements of low-magnesium calcite polyform with < 5 mol % MgCO₃ are indicative of the meteoric-vadose zone.

The outputs of the first phase S10 of the methodology can be characterised as a definition of a MICP process to be used in production of protective material, in terms of identification active bacteria and parameters characterising the nature of the cementation of natural sediments triggered by such bacteria.

### (2) Mold preparation

Following the bacterial analysis in step 510, a mold is prepared in step S20 in which the protective material is to be developed. The mold is a constructed from watertight materials such as a combination of silicon and wood. The mold may be rigid, or have a degree of flexibility to facilitate versatility and removal of the protective material from the mold. The mold is coated with geotextiles and/or geofibres arranged as a shell structure within the mold, and sediment is introduced into the mold to be consolidated. A pipe system is introduced into the mold to supply a bacterial suspension, containing the bacteria identified in step S10, into the sediment in the mold for consolidation.

In embodiments, the mold has a shape which is dependent on the intended nature of the protective material. The geometry of the mold is selected in conjunction with one or more parameters including a required shape, thickness and resilience of the protective material, environmental characteristics, expected water flow velocities, depths, temperatures, tidal effects, and the bacteria identified in the water.

In embodiments, the mold is configured to produce a plurality of units or tiles of protective material which can be applied as a coating to an artificial structure in a tessellating pattern or mosaic. The mold is divided into a plurality of sub-units, each of which has a shape corresponding to that of an individual tile, and a plurality of tiles are formed simultaneously, based on the same sediment material and supply of the same bacterial suspension, so as to be of uniform structure. The application of the coating to the artificial structure can be performed by any suitable fixing means.

In other embodiments, the mold is such that a structure is produced which is not for fixing to an artificial structure, but for arrangement in proximity to the structure, such as a tetrapod. Such a structure may be larger in size than that of a coating tile, and may be irregular in shape.

The geotextiles and/or geofibres allow for the stabilization of the sediment in the geometry of the mold and containment of the bacterial suspension, while pores in the geotextiles or geofibres allow the circulation of water molecules into the sand. The pores are smaller than the molecules of bacteria, so that the bacteria are trapped within the mold.

The sediment which is added to the mold originates from the environment of the artificial structure to be protected. It may be obtained directly from the aquatic environment, or may be obtained from sediment materials previously extracted from the environment in dredging or excavation operations. In this manner, foreign material, with respect to the environment of the artificial structure, is not introduced into the mold.

### (3) Bacterial treatment

In step S30, a bacterial suspension is injected in to the mold through the pipe system installed in step S20, to supply the ureolytic bacteria identified in step S10.

Natural-based MICP solidification solution, including natural sea water material such as CaCI, urea and organic matter, as well as artificial sea water, is also supplied in step S30, considering the natural composition of the seawater, in order to provide Ca²⁺ and organic content to initiate the MICP reaction, in a manner dependent on results from the preliminary analysis. Bacteria and solidification solution may, in some embodiments, be distributed through the pipe network at specific time intervals, and in specific quantities at particular times, according to a supply regime determined from the bacterial analysis step S10 and the MICP definition. The bacteria and solidification solution may be supplied from a source fitted with an automated delivery system, controlled in accordance with the supply regime, by control of the state of a tap and/or control of an injection pump.

The supply of the bacterial suspension and solidification trigger a biochemical cementation process to consolidate the sediment in the mold. The consolidation is monitored to determine its progress, by retrieving liquid samples through the pipe network, and diverting the liquid samples to a monitoring device in order to measure the Ca²⁺ and pH of the liquid, and estimate the progress of the ureolysis procedure. The monitoring device may be co-located with the source of the bacterial suspension, may be positioned elsewhere, or may be detachable from the pipe network via one or more valves, and attached only when monitoring is required to take place. The results from the monitoring device are provided to the control system for controlling supply of the bacterial suspension, and adjustments are made to the rate or content of the supply of the bacterial suspension and/or solidification solution, if these are required.

### (4) Material production and testing

Depending on the bacterial activity, solidification of the natural sediment occurs after a time period of the order of two to three weeks, and the bacterial treatment can be concluded by terminating the supply of bacterial suspension. The solidified material is removed from the mold and tested in step S40, to verify its physical properties, and verify completion of the solidification process.

Testing is performed by determining UCS, determining physical structure, and calculating porosity using X-ray computerised tomography (CT) scanning. Further analysis may be conducted in step S40 using methods such as (a) total organic carbon analysis to measure the amount of organic carbon after inorganic carbon has been removed, (b) Fourier-transform infrared spectroscopy (FT-IR) for better material content interpretation and (c) use of a thermogravimetry analyser (TGA) for determining composition of lignocellulosic biomass in wet chemical methods. The samples are analysed for their mineralogical compositions as well as for their geochemical characteristics using optical polarized microscopy, SEM-EDS and XRD.

The results from the aforementioned analysis are combined in order to evaluate the level of solidification. Every sample is evaluated in relation to slab thickness and surface solidification, microscopic-level cementation, solidification time, and water and air temperature. When the measurements correspond to a predetermined threshold of cementation, it is determined that the material production is complete.

The material is then applied to the artificial structure, either directly as a coating, or as a breakwater structure analogous to a tetrapod, as required, to provide scour protection to the structure.

In embodiments, testing is performed after a predetermined time has elapsed. Bacterial treatment is concluded if one or more test conditions, based on the tests described above, are satisfied within the predetermined time. If the test conditions are not satisfied, the predetermined time is extended if the solidification is showing evidence of progression but at a slower-than-expected rate, and the material is re-tested when the extended predetermined time has elapsed. As an alternative, or in addition, modifications may be made to the mold structure or the bacterial supply regime in order to promote the solidification process.

The embodiments described with reference to Figure 1 are based on biochemical cementation, triggered by bacterial treatment. The principles associated with these embodiments also apply to alternative cementation processes. Embodiments of the present invention thus make use of any cementation process that can be triggered by organic or inorganic agents when applied to natural material.

For example, an enzyme derived from bacterial cells, such as urease, can be used to catalyze the precipitation of CaCO₃ in bacterial-enzyme-induced calcite precipitation (BEICP). This process improves the mechanical properties of soils, such as strength and stability, by binding soil particles together through calcite formation.

The specific nature of the cementation process will depend on the natural material and the triggering agent which is used, but the principle common to each embodiment is the triggering of natural solidification of natural material, to produce a natural protection material. For example, BEICP does not require the bacterial suspension of MICP, and if urease is used as a triggering agent, direct application of urease will initiate calcite precipitation in sediment pores.

The embodiments described with reference to Figure 1 are based on cementation of natural sediment, such as that obtained from a sea bed near the location of the structure to be protected. In alternative embodiments, other natural materials may be used, such as sand from a beach or dunes in the coastal region in which the structure is to be installed. Other natural materials may be obtained from excavation operations on the land.

Any natural material having granular characteristics which can be cemented into a structure mimicking beachrock, is suitable for use, and optimally, the natural material should be sourced from a region which has the same geological characteristics as those associated with the location of the structure to be protected. As such, it may be possible to source natural granular material from several kilometers away from the structure's location, if the source location is such that the natural granular material there is the same as the granular material that can be found at the structure's location. This enables large, accessible sources of natural material, such as desert sand, to be exploited, rather than needing to extracting the same natural material from the sea bed in a more complex operation. Further, waste natural material from previous local construction operations, such as excavations for building or infrastructure foundations in the area, can also be recycled in this manner. The requirement for common geological characteristics ensures that the natural material which is used is not considered as 'foreign' to the structure's location in terms of its material composition, even if the material is obtained from a region which is physically distanced from the structure's location.

The development of an artificially-triggered, naturally-developed protective material is an innovative, sustainable, natural-based engineering solution to mitigate hydrodynamic scouring. The construction of the protective material involves engineering methods and natural materials that are harmless to the environment.

In addition to reducing the scour effect, and enabling minimisation of operation and maintenance costs for artificial structures as a result, a number of environmental advantages are also achieved.

Carbon dioxide, diluted in the sea water, can bind with the 'cement'-like protective material. In doing so, this promotes growth of plant life on protective material itself, while avoiding the wider release of CO₂ through water and in the air where it may be harmful to organisms, for example, fish, and in general to the ecosystem. This leads to a reduction in greenhouse gas emissions, and an increase in marine biodiversity, as well as enhancement of the aesthetics of the infrastructures.

An increase in marine biodiversity is particularly advantageous, as it leads to an improvement in water quality. Bivalve colonisation, for example, helps filter seawater by improving water quality and allowing sunlight to penetrate further, increasing growth at greater depths.

Such marine biodiversity is difficult to achieve using artificial seawall structures, which tend to have smooth surfaces making colonisation by marine life difficult.

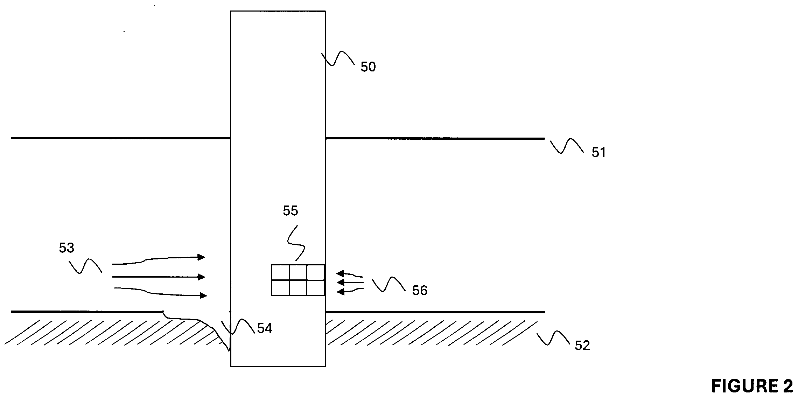

Figure 2 illustrates a tiled coating of protective material, according to embodiments of the present invention. The tiled coating 55 is applied to an artificial structure 50 such as the foundation of a pier, which is partially submerged below the sea level 51, and has a base which is buried in the sea bed 52.

In the illustrated embodiment, the coating is formed of six square shaped tiles which are adjacent to each other in a 3x2 grid. However, this is simply by way of example, and any number of tiles, and any tile shape may be employed. Illustration of the effect of the coating 55 in providing protection against scour is shown by comparison with a region of the structure 50 which does not have the coating applied to it. On the left side of the figure, a fast water flow rate 53 is illustrated, which has the effect of eroding the sea bed 52 in a zone 54 close to the base of the structure 50. This scour effect exposes the base of the structure 50, and makes the structure 50 unstable. On the right side of the figure, where the coating 55 is applied to the structure, the flow rate 56 is much slower, and is not sufficient to cause erosion of the sea bed 52, and so stability of the structure 50 is preserved.

It will be appreciated that specific process details or aspects of the structure or composition of the protective material may vary depending on the location and environmental conditions of the target area, as well as the specific bacteria used for the carbonate precipitation process. As such, embodiments of the present invention are not restricted to use of any specific materials, bacterial triggers, or protective material geometries or thicknesses.

## Claims

1. A method of producing a protective material for providing scour protection to an artificial structure in an aquatic environment, comprising:
providing a mold;
depositing natural granular material, from a region having geological characteristics common to the aquatic environment of the structure, in the mold;
supplying an agent to the natural granular material to initialise cementation of the natural granular material in the mold, such that the cemented natural granular material forms the protective material.

2. A method according to claim 1, wherein the natural granular material is natural sediment from the aquatic environment of the structure.

3. A method according to claim 2, wherein the agent is an enzyme.

4. A method according to claim 2, wherein the agent is a bacterial suspension to initialise biochemical cementation of the natural granular material.

5. The method according to claim 4, comprising selecting the bacterial suspension for supply to the natural sediment, and organic solidification solution, based on analysis of the bacteria content of sediment and water samples at or near the location of the structure to determine the bacteria in the water samples most active in causing microbiologically-induced calcite precipitation in the sediment samples.

6. The method according to claim 5, comprising:
determining one or more parameters of the protective material including at least one of geometry, thickness and resilience, based on properties of the sediment samples cemented using the selected bacterial suspension, and the depth of the structure in the aquatic environment; and
providing the mold having a shape for forming the protective material having the determined one or more parameters.

7. The method of any one of the preceding claims, wherein the mold comprises a plurality of units, the method comprising forming a plurality of units of protective material by depositing natural granular material into each unit of the mold, and supplying the agent to the natural granular material in each unit of the mold.

8. The method of claim 7, wherein the plurality of units of the mold are arranged such that the plurality of units of protective material form tiles configured to attach to the structure as a coating in the form of a tessellation.

9. The method according to any one of the preceding claims, comprising determining whether that the natural granular material has cemented to form the protective material within a predetermined time;
if the natural granular material has cemented to form the protective material within the predetermined time, terminating the cementation;
if the natural sediment has not cemented to form the protective material within the predetermined time, adjusting the shape of the mold, depositing natural granular material in the adjusted mold, and supplying the agent to the natural granular material in the adjusted mold;
wherein determining whether that the natural granular material has cemented to form the protective material within a predetermined time is performed by analysing one or more of a uniaxial unconfined compressive strength, porosity, organic carbon content, mineralogy, geochemical characteristics, and lignocellulosic biomass composition.

10. The method of any one of the preceding claims, wherein the mold is formed of a watertight material, and the method further comprises lining the mold with a geotextile shell prior to depositing the natural granular material, wherein the geotextile shell comprises a porous geotextile material, having a porosity at which the supplied agent is contained within the geotextile shell.

11. A protective material produced according to the method of any one of the preceding claims.

12. A protective material according to claim 11, comprising means for attachment to the structure to be protected.
